# DEMANDE DE BREVET EUROPEEN

(11) **EP 0 633 230 A1**
(43) Date de publication de la demande: **11.01.1995**
(21) Numéro de dépôt: 94401530.4
(22) Date de dépôt: 05.07.1994
(51) Int. Cl.: C03C 17/32, B32B 17/10

(54) **Ecran de vision pour enceinte close**

(30) Priorité: 09.07.1993 FR 9308454
(71) Demandeur: SAINT-GOBAIN VITRAGE, F-92400 Courbevoie (FR)
(72) Inventeur: Dick, Anthony, F-77260 La Ferte Sous Jouarre (FR); Bonnetin, Alain, F-77120 Coulommiers (FR)
(74) Mandataire: Breton, Jean-Claude

(57) **Abrégé**

L'invention concerne des vitrages utilisés pour réaliser des écrans de vision pour enceinte close, telle que des manomètres à cadran, où peut régner une pression supérieure à la pression atmosphérique.

Selon l'invention, un tel vitrage constituant au moins une partie d'une paroi d'une enceinte close et susceptible d'être soumis à des pressions différentes entre ses deux faces, comprend au moins une feuille de verre (1) dont la face orientée vers l'intérieur de l'enceinte est revêtue d'au moins une couche de matière plastique (2).

## Description

L'invention concerne des vitrages utilisés pour réaliser des écrans de vision pour enceinte close. Plus particulièrement, l'invention vise des écrans pour des enceintes où peut régner une pression supérieure à la pression atmosphérique et devant garder leur intégrité en cas de surpression accidentelle et brutale.

Plus particulièrement encore, l'invention vise la réalisation d'écrans pour manomètre à cadran, comportant des boîtiers étanches. Ces boîtiers renferment habituellement un organe sensible soumis à la pression d'un fluide, un mécanisme amplificateur et un dispositif de lecture. L'organe sensible est par exemple une membrane, une capsule, un soufflet ou tout autre mécanisme usuellement utilisé dans l'industrie des manomètres. Le fluide peut être par exemple, un bain d'huile, de l'eau, du pétrole, ou un gaz. Le dispositif de lecture est habituellement une aiguille placée devant un cadran gradué. Ce dispositif de lecture est placé derrière l'écran de vision de façon à ce qu'un opérateur puisse relever les mesures. Ce dispositif et plus particulièrement l'aiguille est relié à l'organe sensible qui est donc l'élément moteur du manomètre. Entre l'aiguille et l'organe sensible est placé un mécanisme amplificateur qui permet une lecture plus aisée de la mesure effectuée. En effet, le déplacement de l'organe sensible est généralement très faible et nécessite une amplification pour rendre le déplacement de l'aiguille plus notable.

La face avant présente donc un écran de vision qui est généralement sous forme d'une feuille de verre trempé. De façon à conserver une bonne étanchéité, l'écran est généralement fixé par vissage avec interposition de joints entre le boîtier et l'écran. Le système de fixation peut également être du type à baïonnette qui assure également une bonne étanchéité et un démontage aisé.

Ce type de manomètre présente cependant un inconvénient. En cas de fuite de l'élément moteur, c'est-à-dire de l'organe sensible, le fluide sous pression peut se répandre et s'accumuler dans le boîtier et provoquer l'explosion de celui-ci. Le plus souvent c'est l'écran de vision qui explose. Un opérateur placé face à cet écran peut donc être blessé soit par la déflagration soit par les éclats de verre provenant de l'écran.

Une telle fuite de l'élément moteur peut être due par exemple à une usure de celui-ci ou bien à une surpression qu'il ne peut généralement pas supporter. Une telle surpression est par exemple l'effet d'un coup de bélier qui est provoqué par la manoeuvre intempestive d'une vanne qui entraîne une brusque variation de pression transmettant un choc violent dans toute l'installation.

Des dispositifs déjà utilisés permettent de limiter certains risques. Il s'agit notamment d'amortisseurs permettant de freiner l'arrivée de pression, tels que des systèmes d'étranglement placés avant l'entrée du manomètre ou par exemple un accumulateur hydropneumatique. Cependant ces dispositifs sont généralement très coûteux ou bien source d'autres problèmes tels que encrassage, réglage difficile. D'autre part, il ne pallie pas le problème posé par une usure de l'organe sensible qui laisse alors le fluide se répandre dans le boîtier.

Un autre dispositif, moins coûteux, consiste à placer une cloison rigide de sécurité, éventuellement percée, séparant le manomètre en deux parties, d'un côté, sont placés l'aiguille et le cadran et de l'autre l'organe sensible. La paroi rigide permet ainsi jusqu'à une certaine valeur de pression d'empêcher ou de limiter le passage des fluides vers le compartiment avant, c'est-à-dire dans la zone où se trouve l'écran en verre. En association avec cette cloison rigide, il peut être prévu un fond amovible du boîtier, susceptible de s'échapper vers l'arrière à la moindre surpression.

Une telle réalisation d'un manomètre est relativement complexe et donc tout de même coûteuse. D'autre part, il apparaît que de tels manomètres subissent tout de même des explosions où l'éclatement du fond amovible s'accompagne tout de même d'une rupture de l'écran de vision et donc d'une projection d'éclats de verre en direction d'un opérateur.

L'invention a pour but la réalisation d'un vitrage, pour manomètres ou pour toutes enceintes pouvant être soumis à des pressions différentes de la pression s'exerçant sur la face extérieure, qui permet de limiter les risques de projection d'éclats de verre en cas de surpression.

Ce but est atteint selon l'invention par un vitrage transparent comprenant au moins une feuille de verre, constituant au moins une partie d'une paroi d'une enceinte close, notamment de façon hermétique, et susceptible d'être soumis à des pressions différentes entre ses deux faces, la face de la feuille de verre orientée vers l'intérieur de l'enceinte étant revêtue d'au moins une couche de matière plastique.

La couche de matière plastique est par exemple un film autocollant ou bien adhérant par l'intermédiaire d'une couche de colle. Il peut également s'agir d'une couche mince déposée par pulvérisation, trempage, à l'aide d'une tête de coulée ou bien par tous autres moyens connus de l'homme du métier.

Il est connu dans l'art antérieur notamment dans le domaine verrier de réaliser des vitrages composites comportant au moins une feuille de verre et une couche de matière plastique pour éviter la projection d'éclats dus à un impact. Le brevet français publié sous le numéro 2 316 913 décrit des verres de protection pour les yeux tels que verres de lunettes ou écrans comprenant une couche de matière plastique déposée sur une feuille de verre. Dans toutes les applications décrites, la couche de matière plastique est appliquée du côté de la feuille de verre orientée vers les yeux pour éviter une projection de débris de verre en cas de casse. D'autres vitrages, notamment utilisés comme vitrages anti-balle ou comme parebrise sur des trains, sont décrits dans la demande de brevet européen 0 130 886. Ce document décrit des vitrages comportant plusieurs feuilles de verre et plusieurs couches de matière plastique ayant chacune des fonctions complémentaires. Il apparaît que la couche de matière plastique se présentant comme une face extérieure du vitrage est placée au sein de l'habitacle, c'est-à-dire du côté opposé à la pression exercée par le choc de l'impact.

Ce type de vitrage est généralement efficace et évite la projection d'éclats au sein de l'habitacle c'est-à-dire à l'endroit où peuvent se trouver des personnes.

La structure composite proposée par l'invention est différente de celle décrite par les documents précités mais procure des résultats tout à fait inattendus. En effet, il apparaît, bien que le film plastique soit disposé au sein de l'enceinte close, c'est-à-dire en direction de la force de pression occasionnée par une surpression, qu'aucun éclat de verre ne se crée et donc n'est projeté depuis l'autre face du vitrage.

La fonction des couches de matière plastique décrites dans l'art antérieur consiste lorsqu'elles sont épaisses à former un bouclier supplémentaire pour résister à l'impact et donc pour éviter la projection d'éclats de verre si la feuille de verre adjacente n'a pas résisté. Lorsqu'elles sont minces, la fonction des couches de matière plastique consiste à retenir assemblés les morceaux d'une feuille de verre brisée et à éviter que ces morceaux ne soient projetés.
La fonction de la couche de matière plastique selon l'invention est différente. Elle permet d'éviter la rupture de la feuille de verre pour une surpression donnée. Il apparaît en effet que selon l'invention, pour des valeurs de pression entraînant la rupture d'un écran de vision habituellement utilisé, l'écran de vision ne subit aucun dommage. Il apporte donc une sécurité pour un éventuel observateur puisque l'écran ne casse pas et qu'il n'apparaît aucune projection d'éclats de verre.

Il est difficile d'interpréter le rôle joué par le film plastique. En fait, il apparaît que le vitrage montre une résistance à la pression bien supérieure à celle des vitrages couramment utilisés. Une interprétation possible de ce phénomène pourrait être que le film plastique permet une meilleure homogénéité de la répartition de la pression sur toute la surface du vitrage. Un tel vitrage permet avantageusement la réalisation d'un écran de vision dont les risques de rupture sont diminués ou plus exactement repoussés à des valeurs de surpression supérieures à celles entraînant la rupture d'écrans classiques.

Ces propriétés de résistance sont avantageusement renforcées par l'utilisation d'au moins une feuille de verre trempé.

Dans une variante selon l'invention, le vitrage comporte au moins deux feuilles de verre séparées l'une de l'autre par un intercalaire de type polyvinylbutyral.

Il est avantageusement possible d'associer au vitrage déjà décrit une couche de matière plastique sur la face orientée vers l'opérateur, présentant une épaisseur telle qu'il n'y ait pas d'éclats en cas de bris de la feuille de verre adjacente.

Selon un mode préféré de l'invention, la matière plastique constituant le film adhésif est un polyester, un polyuréthane ou une combinaison de plusieurs films.

L'épaisseur de ces films seuls ou en combinaison est avantageusement inférieure à 1 millimètre et de préférence inférieure à 500 microns.

Dans une variante selon l'invention, le vitrage possède des propriétés électromagnétiques modifiées et/ou des propriétés anti-rayonnements.

Ces propriétés peuvent être obtenues par dépôt d'oxydes métalliques et/ou de métaux sous forme de couche sur la matière plastique ou bien sur le verre. Ils peuvent également être déposés sur chacun de ces substrats.

Les oxydes métalliques et/ou métaux peuvent également être insérés sous forme de pigments soit dans la composition de la matière plastique, soit dans la composition du verre. Ils peuvent aussi être insérés dans les deux compositions.

L'invention ainsi décrite permet de réaliser un vitrage notamment pour constituer un écran de vision pour manomètre soumis occasionnellement à des surpressions sans risque de rupture d'une feuille de verre et donc de projection d'éclats de verre en direction d'un opérateur.

L'invention permet donc la réalisation de manomètre offrant de bonnes garanties de sécurité à moindre coût.

Il est cependant envisageable de combiner un vitrage selon l'invention avec les éléments précédemment décrits que sont une cloison rigide interne et un fond amovible. Une telle réalisation apporte une sécurité encore plus importante.

L'invention a été décrite pour une utilisation sur un manomètre mais un tel vitrage peut trouver un intérêt pour d'autres applications telles que des écrans de réacteurs chimiques ou de façon générale des écrans pour des enceintes pouvant subir de brusques surpressions internes.

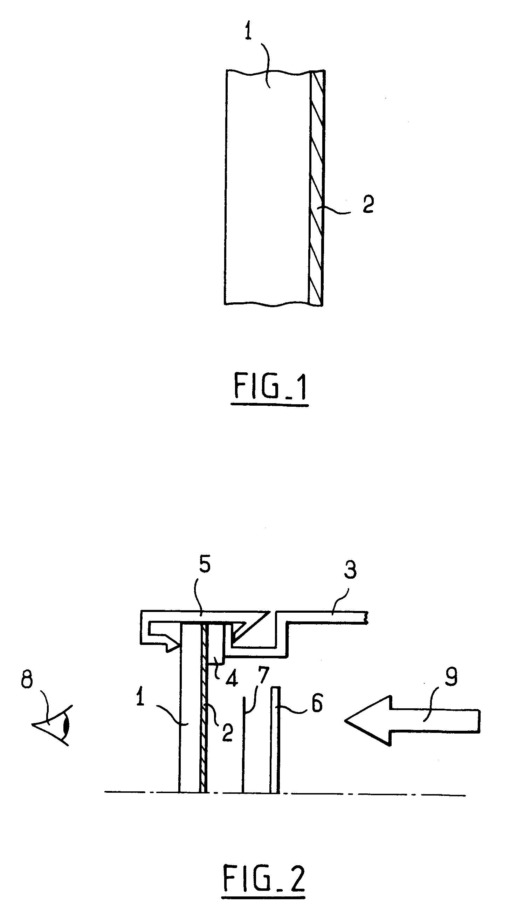

D'autres détails et caractéristiques avantageux de l'invention ressortent ci-après de la description des exemples de réalisation décrits en référence aux figures 1 et 2 qui représentent :
- figure 1, une vue en élévation d'un schéma d'un vitrage selon l'invention,
- figure 2, un schéma représentant le vitrage dans un manomètre.

La figure 1 représente une vue en élévation d'un exemple de vitrage selon l'invention. Celui-ci se compose d'une feuille 1 de verre trempé et d'un film plastique 2 adhésif. Le film plastique est par exemple un film polyester transparent, d'une épaisseur de 100 microns, qui présente une bonne résistance chimique et un allongement à la rupture de 200 %.

La réalisation d'un tel vitrage est très simple à mettre en oeuvre et d'un coût peu important. Elle se déroule en plusieurs étapes. Tout d'abord, il est nécessaire d'effectuer un nettoyage correct de la surface du verre sur laquelle va venir adhérer le film plastique. Ce nettoyage est par exemple effectué par pulvérisation d'une solution à base d'un détergent.

Le film adhésif est ensuite déposé sur cette face du vitrage. Si le film est livré avec une couche protectrice, celle-ci est retirée auparavant.

L'adhésion du film sur le verre est obtenu par pressage par exemple à l'aide d'une raclette en caoutchouc. Le film est de préférence humidifié de façon à faciliter le processus de collage et à éviter tous risques de rayures lors du raclage. Le vitrage obtenu est alors très rapidement manipulable c'est-à-dire après quelques minutes et peut être utilisé après quelques jours. Cette attente est nécessaire de façon à ce que l'eau qui a été déposée soit totalement éliminée.

La feuille de matière plastique utilisée peut également être une feuille de polyuréthane telle que celle décrite dans le brevet français 2 398 606.

La forme des vitrages ainsi réalisés est habituellement ronde du fait de la forme des boîtiers de manomètre mais elle peut être de tout type.

La figure 2 représente un schéma du montage d'un tel vitrage dans un manomètre. La figure 2 est une vue de côté et ne représente que la moitié d'un manomètre.

Le boîtier 3 est le plus souvent réalisé en tôle emboutie. Il peut également être constitué de fonte, de laiton, d'alliage d'aluminium coulé sous pression, de matière plastique thermodurcissable ou bien de tôle d'acier inoxydable si l'atmosphère ambiante est corrosive.

Le vitrage composé de la feuille de verre 1 et du film plastique 2 vient s'appliquer par l'intermédiaire d'un joint caoutchouc 4 sur le boîtier 3. La fermeture est obtenue par un dispositif 5 du type à baïonnette. L'association du dispositif 5 et du joint caoutchouc 4 permet d'obtenir une étanchéité totale et donc un manomètre hermétique. Sont également représentés sur la figure 2 un cadran gradué 6 et une aiguille 7 commandé par un élément sensible, ou élément moteur, non représenté.

Le croquis 8 symbolise la position d'un opérateur placé devant le manomètre. La flèche 9 indique quant à elle le sens de la pression qui vient s'exercer sur le vitrage lorsqu'un incident intervient et entraîne une brusque surpression.

Des essais comparatifs ont été réalisés sur des vitrages selon l'invention et sur des vitrages habituellement utilisés c'est-à-dire des vitrages feuilletés comportant deux feuilles de verre, trempé chimiquement, séparées par un intercalaire en polyvinylbutyral. Les montages sont réalisés dans les deux cas selon le principe du schéma de la figure 2.

Les essais consistent à mesurer la pression jusqu'à laquelle peuvent résister ces vitrages.

Les résultats obtenus sont les suivants :
. vitrage usuel : rupture à environ 100 bars,
. vitrage selon l'invention : rupture pour une pression comprise entre 300 et 500 bars.

D'autres essais ont été réalisés selon la norme DIN 16 007. Il s'avère que selon cette norme l'écran de vision résiste à une valeur d'au moins 16 250 bars/cm³. Une mesure supérieure est impossible car le boîtier tel qu'il est conçu ne peut lui-même résister.

Ces essais mettent clairement en évidence l'intérêt de l'invention. Contrairement à des techniques connues, l'écran de vision selon l'invention résiste à des pressions plus importantes.

Un dispositif supplémentaire consistant à éviter la projection d'éclats n'est donc plus indispensable.

## Revendications

1. Vitrage transparent comprenant au moins une feuille de verre, constituant au moins une partie d'une paroi d'une enceinte close et susceptible d'être soumis à des pressions différentes entre ses deux faces, caractérisé en ce que la face de la feuille de verre orientée vers l'intérieur de l'enceinte est revêtue d'au moins une couche de matière plastique.

2. Vitrage selon la revendication 1, caractérisé en ce que l'enceinte est soumise à une pression supérieure à la pression atmosphérique.

3. Vitrage selon l'une des revendications 1 ou 2, caractérisé en ce que l'enceinte est hermétiquement close.

4. Vitrage selon l'une des revendications précédentes, caractérisé en ce qu'au moins une feuille de verre est en verre trempé thermiquement ou chimiquement.

5. Vitrage selon l'une des revendications précédentes, caractérisé en ce qu'il comporte au moins deux feuilles de verre séparées par un intercalaire du type polyvinylbutyral.

6. Vitrage selon l'une des revendications précédentes, caractérisé en ce qu'une couche anti-éclats est déposée sur la surface du vitrage orientée vers l'extérieur.

7. Vitrage selon la revendication 6, caractérisé en ce que la couche anti-éclats comporte au moins une couche de polycarbonate d'épaisseur comprise entre 2 et 6 millimètres.

8. Vitrage selon l'une des revendications précédentes, caractérisé en ce que la couche de matière plastique est un film polyester, ou film polyuréthane ou une combinaison de plusieurs films.

9. Vitrage selon la revendication 8, caractérisé en ce que l'épaisseur du film ou de la combinaison est inférieure au millimètre et de préférence à 500 microns.

10. Vitrage selon l'une des revendications précédentes, caractérisé en ce qu'il possède des propriétés électromagnétiques modifiées et/ou des propriétés anti-rayonnements.

11. Vitrage selon la revendication 10, caractérisé en ce que les propriétés électromagnétiques modifiées et/ou anti-rayonnements sont obtenues par dépôt d'oxydes métalliques et/ou de métaux sous forme de couche sur la matière plastique et/ou sur le verre et/ou par insertion de pigments d'oxydes métalliques et/ou de métaux dans la composition de la matière plastique et/ou du verre.

12. Utilisation d'un vitrage selon l'une des revendications 1 à 11 comme écran d'un manomètre, éventuellement à boîtier étanche.

13. Utilisation d'un vitrage selon l'une des revendications 1 à 11 comme écran de vision pour des enceintes soumises à des surpressions brutales ou à des explosions.
